# FASCICULE DE BREVET EUROPEEN

(11) **EP 3 781 462 B1**
(45) Date de publication et mention de la délivrance du brevet: **01.06.2022**
(21) Numéro de dépôt: 19716922.0
(22) Date de dépôt: 15.04.2019
(51) Int. Cl.: B62D 43/04

(54) **ORGANE DE CENTRAGE D'UN CÂBLE DE FIXATION D'UNE ROUE DE SECOURS SOUS UN PLANCHER DE VÉHICULE AUTOMOBILE**
VORRICHTUNG ZUM ZENTRIEREN EINES KABELS ZUR BEFESTIGUNG EINES RESERVERADES UNTERHALB DES BODENS EINES KRAFTFAHRZEUGS
DEVICE FOR CENTRING A CABLE FOR FIXING A SPARE WHEEL BENEATH THE FLOOR OF A MOTOR VEHICLE

(30) Priorité: 16.04.2018 FR 1853283
(43) Date de publication de la demande: 24.02.2021
(73) Titulaire: Renault s.a.s, 92100 Boulogne Billancourt (FR)
(72) Inventeur: NEAGU, Vasile, Sector 6 Bucuresti (RO); FULAS, Victor, 077040 Judet IF Chiajana (RO); CALCIU, Catalin, Sector 6 Bucuresti (RO); QUEVILLY, Eric, 32700 LECTOURE (FR); PIERRE, Jerome, 077190 Voluntari Ilfov (RO)
(74) Mandataire: Renault Group
(86) Numéro de dépôt international: PCT/EP2019/059678
(87) Numéro de publication internationale: WO 2019/201858

(56) Documents cités:
- FR-A1- 3 006 286
- US-A- 3 542 413
- US-A- 6 026 999
- US-A1- 2010 186 467

## Description

### DOMAINE TECHNIQUE DE L'INVENTION

L'invention concerne un organe de centrage d'un câble à l'intérieur d'une roue de secours de véhicule automobile, un ensemble comportant une roue de secours de véhicule automobile et un organe de centrage associé, un véhicule automobile équipé d'un tel ensemble, et un dispositif de fixation d'une roue de secours au moyen d'un treuil, et d'un câble de traction de la roue de secours qui traverse un organe de centrage du câble par rapport à la roue.

### ARRIERE PLAN TECHNIQUE DE L'INVENTION

L'invention concerne l'agencement et la fixation d'une roue de secours de véhicule automobile sous une portion de plancher du véhicule.

L'invention concerne notamment une conception faisant appel à un treuil dont le câble, ou un élément souple analogue, est accroché à la roue de secours pour permettre de la soulever pour la ranger et la stocker sous le plancher, ou de la faire descendre en vue de l'utiliser.

Une roue de véhicule, et notamment une roue de secours est essentiellement constituée d'une jante annulaire, qui porte un pneumatique ou un élément analogue comportant une bande de roulement, et d'un disque central - comportant un orifice central - permettant sa fixation sur le véhicule, par exemple sur une fusée.

Le disque central est décalé axialement par rapport à un plan médian de la jante pour dégager un espace ou logement interne de la roue permettant notamment d'accueillir un frein à tambour ou à disque. Il peut aussi présenter un profil galbé dont la convexité est globalement orientée vers l'extérieur à l'opposé du logement interne de la roue.

Le document US-A-3.542.413 illustre une telle roue et il propose un système de fixation comportant un câble dont l'extrémité libre est arrimée à la roue en coopérant avec la partie centrale du disque de la roue, et dont l'autre extrémité est reliée à un treuil porté par la structure du véhicule.

Le câble est guidé sur le véhicule depuis le treuil jusqu'au droit de la portion de structure ou de plancher sous laquelle on doit ranger et fixer la roue de secours.

Grâce à un effort d'enroulement du câble sur le treuil, le système permet de soulever la roue, généralement depuis le sol, pour l'amener progressivement en position haute rangée et fixée.

Pour faciliter cette manœuvre, et notamment sa phase finale d'approche de la face inférieure de la portion de plancher, il est souhaitable que la roue soit stable et s'étende globalement dans un plan horizontal.

Une telle manœuvre est d'abord réalisée au moins une fois en usine lors de la fabrication du véhicule pour y installer au moins une roue de secours. Cette manœuvre doit ensuite être répétée par l'utilisateur du véhicule lorsqu'il souhaite remplacer une roue par la roue de secours.

L'utilisateur doit alors non seulement déposer la roue de secours et la libérer du système à câble, mais il doit aussi ensuite replacer et fixer la roue du véhicule, qu'il a remplacé par la roue de secours, au moyen du système à câble et treuil.

Pour améliorer la stabilité de la roue lors des manœuvres et l'ergonomie du système, le document US-A-3.542.413 propose de prévoir l'utilisation d'un organe de centrage du câble à l'intérieur de la roue qui comporte un corps de centrage dont une portion de la surface latérale périphérique, de profil cylindrique conique, est reçue dans une portion complémentaire de la roue de secours et qui comporte un trou axial traversant de passage du câble.

Cet organe de centrage est ainsi disposé autour du câble et il assure sa fonction de centreur en étant ici reçu dans l'orifice central du disque de la roue.

L'organe de centrage est indépendant des moyens de fixation du câble sur la roue.

L'agencement de l'organe de centrage dans l'orifice central du disque de la roue est aisé et adapté lorsque le disque de la roue est adjacent à la face inférieure du plancher et le logement interne orienté vers le bas.

Toutefois, si les contraintes d'environnement et de dimensionnement obligent à orienter la roue de manière inverse avec le disque orienté vers le sol, l'utilisation d'un organe de centrage en position "basse" dans le trou central du disque de la roue aboutit à un défaut de stabilité "horizontale" de la roue lors des manœuvres, cette dernière tendant alors fortement à basculer jusqu'à s'étendre quasiment dans un plan vertical.

Afin de faciliter la mise en place de l'organe de centrage sur le câble, il a été proposé - par exemple dans le document US-A-2011/0155773 - que le câble puisse être introduit dans le trou axial traversant de l'organe de centrage selon une direction radiale, le corps de l'organe de centrage étant fendu à cet effet.

Toutefois la conception est complexe et rend peu aisées les opérations de mise en place et de démontage du corps de centrage autour du câble.

En outre, le document FR 3 006 286 A1 décrit un organe de centrage d'un câble à l'intérieur d'une roue de secours de véhicule automobile, selon le préambule de la revendication 1.

L'invention vise à proposer une nouvelle conception d'un organe de centrage qui, par sa conception et/ou ses modes de mise en œuvre et d'utilisation, remédie à l'une au moins des difficultés qui viennent d'être évoquées.

### BREF RESUME DE L'INVENTION

L'invention propose un organe de centrage d'un câble l'intérieur d'une roue de secours de véhicule automobile, organe de centrage qui comporte :
- un corps de centrage dont une portion de face latérale est apte à être reçue dans une portion complémentaire de la roue de secours et qui comporte :
   -- un trou axial traversant de passage du câble ;
   -- et une fente axiale débouchante d'introduction du câble dans le trou axial qui s'étend radialement depuis la face latérale du corps de centrage jusqu'au trou axial ;
- et une pièce de retenue du câble à l'intérieur du trou axial par obturation au moins partielle de la fente d'introduction du câble.

Selon d'autres caractéristiques de l'organe de centrage :
- la pièce de retenue du câble comporte un fût qui s'étend axialement dans le trou axial de passage du câble et qui comporte une fente axiale d'introduction du câble à l'intérieur du fût, et la pièce de retenue du câble est montée pivotante par rapport au corps de centrage entre une première position angulaire, de montage du câble à l'intérieur du trou axial du corps de centrage, dans laquelle la fente axiale du fût est alignée angulairement avec la fente d'introduction du corps de centrage, et une deuxième position angulaire, de retenue du câble, dans laquelle une portion de paroi latérale du fût s'étend en regard de la fente d'introduction du corps de centrage ;
- le fût de la pièce de retenue du câble s'étend axialement sur toute la hauteur du trou axial du corps de centrage pour obturer la fente du corps de centrage sur toute sa hauteur ;
- l'organe de centrage comporte une pièce tubulaire de guidage en rotation de la pièce de retenue du câble qui est interposée radialement entre la paroi interne du trou axial du corps de centrage et la paroi externe du fût de la pièce de retenue du câble, et qui est fendue axialement sur toute sa hauteur en vis-à-vis de la fente d'introduction du corps de centrage ;
- l'une des extrémités axiales de la pièce tubulaire de guidage comporte des moyens d'indexation en position angulaire de la pièce tubulaire par rapport au corps de centrage ;
- le corps de centrage est réalisé par moulage en un premier matériau dit tendre, notamment en polystyrène expansé ou en un matériau hybride à base de polystyrène et de polyoléfine, et en ce que la pièce de retenue est réalisée par moulage en un deuxième matériau dit dur, tel qu'un polymère thermoplastique ;
- le trou axial traversant de passage du câble est un trou central du corps de centrage.

L'invention propose aussi un ensemble comportant :
- une roue de secours de véhicule automobile comportant une jante latérale annulaire et un disque de fixation de la roue de secours ;
- et un organe de centrage selon l'invention,
caractérisé en ce que ladite portion de la face latérale du corps de centrage de l'organe de centrage est reçue à l'intérieur d'une portion complémentaire de la jante de la roue de secours.

Le disque de fixation de la roue de secours est décalé axialement par rapport à un plan radial médian de la jante pour délimiter un espace interne de la jante, et en ce que l'organe de centrage est agencé dans ledit espace interne.

En variante, l'invention propose un ensemble comportant :
- une roue de secours de véhicule automobile comportant une jante latérale annulaire et un disque de fixation de la roue de secours ;
- et un organe de centrage selon l'invention,
caractérisé en ce que ladite portion de la face latérale du corps de centrage de l'organe de centrage est reçue dans un orifice central du disque de fixation de la roue de secours.

L'invention propose encore un véhicule automobile comportant au moins une portion d'un plancher et un ensemble selon l'invention qui est agencé en-dessous de cette portion du plancher, caractérisé en ce que l'organe de centrage est agencé en regard de ladite portion du plancher.

L'invention propose enfin un dispositif de fixation d'une roue de secours d'un véhicule automobile, caractérisé en ce qu'il comprend :
- un treuil de traction de la roue de secours ;
- un câble de traction de la roue de secours dont une extrémité est reliée au treuil et dont l'autre extrémité est reliée à la roue de secours ;
- et un organe de centrage du câble par rapport à la roue de secours selon l'invention.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique en perspective de dessous de la partie arrière du plancher d'un véhicule automobile sous lequel une roue de secours est fixée par un système à treuil et câble ;
- la figure 2 est une vue schématique en perspective éclate des principaux composants du système à treuil et câble de la figure 1 comportant notamment un premier exemple de réalisation d'un organe de centrage selon l'invention ;
- la figure 3 est une vue des composants illustrés à la figure 2 qui sont représentés en coupe par un plan vertical médian de la roue de secours et de l'organe de centrage illustré en position à l'intérieur de la jante de la roue de secours ;
- la figure 4 est une vue en perspective du corps de centrage de l'organe de centrage illustré aux figures 2 et 3 ;
- la figure 5A est une vue en perspective d'un sous ensemble comportant la pièce de retenue du câble en position montée dans la pièce tubulaire intermédiaire de guidage par rapport à la quelle elle est représentée dans sa première position angulaire permettant le montage du câble à l'intérieur du corps de guidage ;
- la figure 5B est une vue analogue à celle de la figure 5A dans laquelle la pièce de retenue est représentée dans sa deuxième position angulaire de retenue du câble ;
- la figure 6 est une vue du corps de centrage illustré à la figure 4, représenté en coupe par un plan vertical médian passant par la fente d'introduction du câble ;
- la figure 7 est une vue latérale de détail de la pièce tubulaire intermédiaire de guidage illustrée aux figures 5A et 5B ;
- la figure 8 est une vue latérale de détail de la pièce de retenue du câble illustrée aux figures 5A et 5B ;
- la figure 9 est une vue de dessus d'un corps de centrage appartenant à un deuxième exemple de réalisation d'un organe de centrage selon l'invention ;
- la figure 10 est une vue analogue à celle de la figure 5A qui illustre une pièce de retenue et une pièce intermédiaire de guidage appartenant au deuxième exemple de réalisation d'un organe de centrage selon l'invention ;
- la figure 11 est vue analogue à celle de la figure 5B qui illustre la pièce de retenue et la pièce intermédiaire de guidage appartenant au deuxième exemple de réalisation d'un organe de centrage selon l'invention, le sous-ensemble de ces deux pièces étant illustré en position éclatée par rapport à la partie centrale du corps de guidage représenté à la figure 9 ; et
- les figures 12A et 12B sont deux vues partielles de dessus du deuxième exemple de réalisation de l'organe de centrage selon l'invention sur lesquelles la pièce de retenue du câble est illustrée dans ses première et deuxième positions angulaires de montage du câble et de retenue du câble respectivement.

### DESCRIPTION DETAILLEE DES FIGURES

Dans la suite de la description, des éléments présentant une structure identique ou des fonctions analogues seront désignés par des mêmes références.

Dans la suite de la description, on adoptera des orientations longitudinale, verticale et transversale indiquées par le trièdre "L,V,T" des figures. On définit aussi un plan horizontal qui s'étend longitudinalement et transversalement.

En position montée d'une roue de secours sous un plancher, l'axe de rotation de la roue s'étend sensiblement selon la direction verticale.

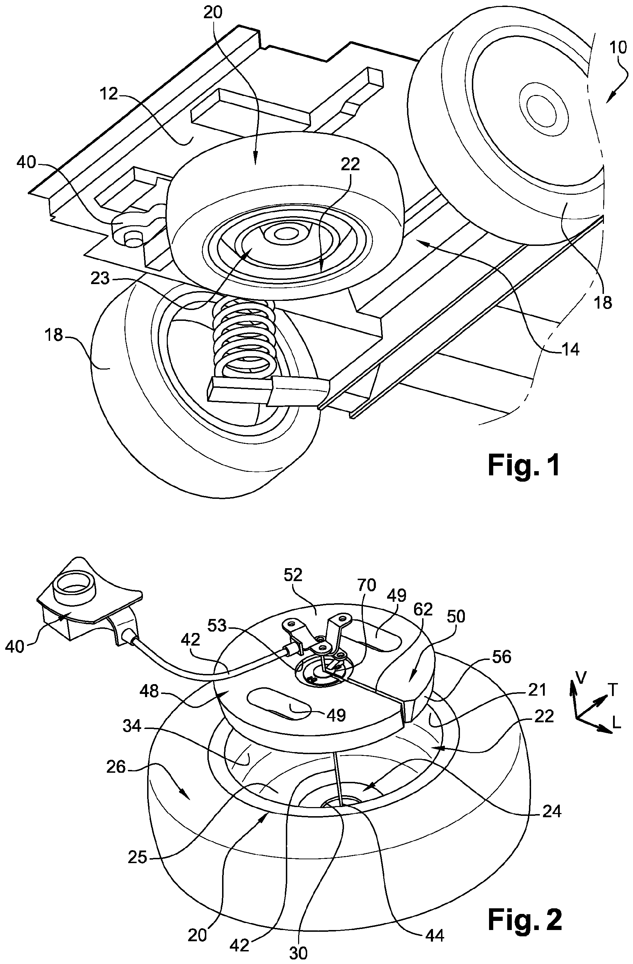

On a représenté à la figure 1 la partie arrière d'un véhicule automobile 10 qui comporte notamment une portion 12 d'un plancher 14 qui s'étend transversalement entre les deux roues arrière 18 du véhicule.

Une roue de secours 20 est agencée et fixée sous la portion 12 de plancher.

La roue d'axe général central de rotation est essentiellement constituée d'une jante latérale annulaire 22 et d'un disque central interne 24 qui s'étend dans un plan orthogonal à l'axe de la roue.

A l'extérieur, la jante 22 porte un pneumatique 26, tandis que le disque central comporte un orifice central 30 pour le centrage de la roue lorsqu'elle est utilisée en roue de roulage.

Le disque central 24 présente un profil galbé avec notamment une portion annulaire 23 dont la convexité est orientée vers l'extérieur de la roue, une telle zone galbée pouvant notamment conférer à la roue un style ornemental particulier.

Le disque central 24 est décalé axialement par rapport à un plan médian de la jante 22 et il est ainsi agencé à proximité d'un bord axial circulaire de la jante 22.

La roue 20 comporte ainsi, à l'intérieur de la jante 22 et logement interne 32 qui est notamment délimité par la face latérale interne concave 21 de la jante 22 et par la face interne 25 du disque central 24.

A titre non limitatif, le positionnement de la roue de secours sous le plancher 14 est tel que le logement interne 32 de la jante est orienté vers le haut en regard de la portion 12 du plancher 14, tandis que le disque central 24 est décalé verticalement vers le bas et s'étend en regard de la portion de sol situé en dessous.

En section par un plan axial, la jante 22 présente un profil complexe qui comporte ici un tronçon 34 sensiblement rectiligne et parallèle à l'axe, c'est à dire correspondant à un tronçon cylindrique circulaire de la jante 22.

De manière connue, la fixation de la roue 20 sous la portion 12 du plancher 14 est assurée au moyen d'un treuil 40, manuel et/ou électrique, qui est fixé sur la structure du véhicule 10 et qui agit sur une extrémité d'un câble 42 pour l'enrouler ou le dérouler sur le tambour du treuil 40.

Le câble 42 est guidé par rapport à la structure du véhicule de manière que son tronçon d'extrémité libre puisse s'étendre globalement verticalement vers le bas.

Ainsi, de manière connue, l'extrémité libre 44 du câble 42 peut être déplacée verticalement dans les deux sens.

Pour la fixation de la roue 20, l'extrémité libre 44 du câble 42 est fixée à la roue 20, par exemple au disque central 24, par tout moyen connu adapté à cet effet, l'extrémité libre 44 du câble 42 étant sensiblement centrée par rapport à la jante 22.

La liaison de l'extrémité libre 44 du câble 42 avec la roue est telle qu'elle soit démontable ou dissociable pour permettre de l'attacher à une roue que l'on veut fixer sous le plancher 14 en tirant sur le câble 42, ou de la détacher d'une roue de secours que l'on vient de déposer sur le sol en relâchant le câble 42.

Au cours de ces différentes manœuvres, et notamment lors de la mise en place et de la fixation d'une roue 20 en la soulevant, il est important que la roue ne bascule pas et conserve une orientation globalement horizontale.

Une telle stabilité est plus particulièrement problématique lorsque le disque central 24 est orienté « vers » le bas avec ainsi un point d'accrochage de l'extrémité libre 44 du câble 42 situé verticalement en-dessous du centre de gravité de la roue 20.

Pour améliorer cette stabilité et aussi faciliter le centrage du câble à l'intérieur de la roue 20, il est fait appel à un organe de centrage 48 qui est essentiellement constitué d'un corps de centrage 50 de forme générale de révolution.

Le corps de centrage 50 est ici en forme générale d'un disque épais ou « galette » qui est délimité verticalement par deux faces planes parallèles supérieure 52 et inférieure 54, et qui est délimité latéralement par une face latérale convexe 56 de révolution qui, à titre non limitatif, est ici de profil tronconique de diamètre décroissant vers le bas.

Les dimensions du corps de centrage 50, et notamment son diamètre moyen, sont telles qu'il est ici monté à l'intérieur de la jante 22 en étant par exemple emboîté légèrement « à force » en contact avec la surface concave interne 21 du tronçon 34 de la jante 22.

Pour permettre le passage du câble 42, le corps de centrage 50 comporte un trou axial traversant 58 qui s'étend ainsi entre les faces 52 et 54 et qui débouche verticalement vers le haut dans un lamage central 53 de la face supérieure 52.

Le trou 58 est ici un trou central du corps de centrage 50.

Le trou central 58 est délimité par une paroi interne concave 60 qui est ici une paroi cylindrique circulaire de section constante sur toute la hauteur du trou 58.

Pour permettre d'introduire le câble 42 dans le trou 58, notamment lorsque son extrémité libre 44 est déjà reliée à la roue 20, le corps de centrage 50 comporte une fente 62.

La fente d'introduction 62 s'étend radialement depuis la face latérale convexe 56 du corps de centrage 50 jusqu'au trou axial 58.

La fente d'introduction 62 est débouchante axialement dans les deux faces 52 et 54 du corps de centrage 50 et elle comporte un chanfrein 64 formé dans la face latérale 56 pour faciliter l'introduction radiale du câble 42 dans la fente d'introduction 62.

Dans ce mode de réalisation, le corps de centrage 50 se présente sous la forme d'un corps plein en une seule pièce dans laquelle sont formés le trou axial central 58 et la fente 62 d'introduction du câble 42.

Le corps de centrage est par exemple réalisé par moulage par injection d'un matériau synthétique et par exemple en polyester expansé (EPS) ou en un matériau hybride (Piocelan ^{®}) à base de polystyrène sous forme d'une mousse de résine hautement fonctionnelle à laquelle ont été ajouté les caractéristiques de la polyoléfine. C'est grâce à l'hybridation de la polyoléfine et aux excellentes propriétés du polystyrène expansé (EPS), telles que la rigidité et la faible densité de la mousse, que les caractéristiques comme la résistance aux chocs sont améliorées.

Ainsi, ce composant est peu coûteux à réaliser et il est très léger pour ne pas augmenter excessivement le poids de la roue de secours.

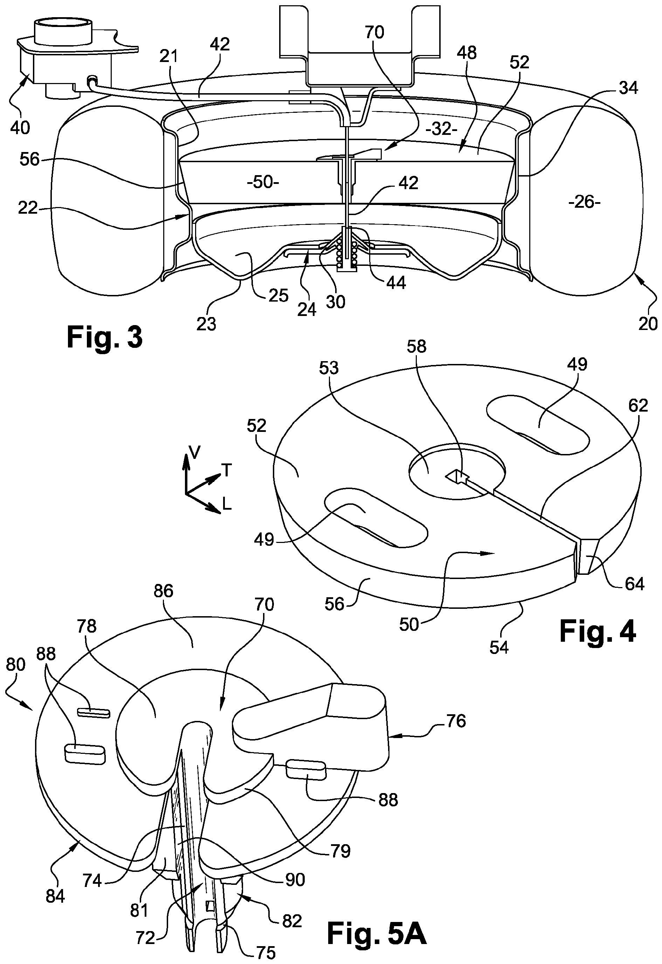

Ainsi, il est possible de mettre le corps de centrage 50 en place dans la jante 22 en introduisant d'abord le câble 42 dans le trou central 58 en passant par la fente d'introduction 62, puis en faisant coulisser le corps de centrage 50 le long du câble 42 pour l'amener à l'intérieur de la jante, par exemple dans sa position montée illustrée à la figure 3.

Ensuite, lors de l'actionnement du treuil, le point le plus haut de contact du câble avec la roue est constitué avec le point de son contact avec le bord supérieur du trou axial central 58, à son intersection avec la face supérieure 52, ce point étant alors situé verticalement au-dessus du centre de gravité de la roue 20.

Pour faciliter la manipulation du de l'organe de centrage 48, le corps de centrage 50 comporte plusieurs évidements de préhension 49 qui sont ici réalisés sous la forme de deux lumières transversales oblongues et diamétralement opposées.

Pour un bon fonctionnement et la fiabilité de mise œuvre de l'organe de centrage 48 et du système de fixation à treuil et câble, il est important que le câble 42 demeure en position dans le trou axial central 58 sans risquer de s'en échapper accidentellement.

A cet effet, l'organe de centrage 48 est équipé d'une pièce 70 de retenue du câble 42 qui est conçue globalement comme un « verrou » pivotant pour « emprisonner » le câble 42 dans le trou axial 58 en obturant la fente 62 d'introduction du câble 42.

La pièce de retenue 70 est essentiellement constituée par un fût cylindrique vertical 72 qui s'étend verticalement sur toute la hauteur ou épaisseur du corps de centrage 50 et qui s'étend axialement à l'intérieur du trou axial 58 de passage du câble 42.

Comme le corps de centrage 50, le fût 72 de la pièce de retenue 70 comporte une fente axiale débouchante 74 qui s'étend sur toute la hauteur du fût 70 et de la pièce de retenue 72.

Ainsi, la fente 74 permet l'introduction radiale du câble 42, depuis la fente 62 du corps de centrage 50, à l'intérieur du fût 72, et donc à l'intérieur du trou axial central 58 qui entoure le fût 70 qui lui est coaxial.

La pièce de retenue 70 est conçue et est montée sur le corps de centrage 50 de manière à pouvoir pivoter par rapport à ce dernier autour de son axe et dans les deux sens, notamment entre une première position angulaire relative dans laquelle la fente 74 du fût 72 est alignée angulairement avec la fente 62 du corps de centrage, et une deuxième position angulaire relative dans laquelle c'est une portion angulaire de la paroi pleine du fût 72 qui est alignée angulairement avec la fente 62 du corps de centrage 50 et qui obture cette dernière sur toute sa hauteur axiale.

Ces deux positions angulaires fonctionnelles distinctes sont par exemple décalées angulairement l'une par rapport à l'autre d'un demi-tour soit environ 180 degrés d'angle.

Pour manœuvrer à la main la pièce de tenue 70 en pivotement angulaire dans les deux sens, la pièce de retenue comporte, à son extrémité supérieure, un organe de manœuvre en forme d'une poignée latérale d'orientation radiale.

Cette poignée 76 de manœuvre est reliée à l'extrémité supérieure du fût 72 par l'intermédiaire d'un disque de liaison 78 qui est délimité par une face inférieure plane 79.

La pièce de retenue 70 est par exemple réalisée par moulage en matériau plastique par injection.

On choisit ici un matériau « dur », par rapport à un matériau tendre tel que du polystyrène expansé, de manière à pouvoir résister aux efforts appliqués par le câble 42 sur la paroi interne du fût 72.

La pièce peut par exemple être moulée en poly-oxy-méthylène (ou poly-formaldéhyde ou poly-acétal) aussi appelé « POM », ou encore en polypropylène.

Pour monter la pièce de retenue 70 sur le corps de centrage 50 tout en permettant son pivotement dans les deux sens, l'organe de centrage 48 comporte une pièce tubulaire intermédiaire 80 de guidage en rotation de la pièce 70 de retenue du câble 42.

La pièce tubulaire de guidage 80 est essentiellement constituée d'un tube inférieur 82 de guidage et d'une plaque supérieure 84 de positionnement et d'immobilisation notamment angulaire de cette pièce sur le corps de centrage 50.

La plaque supérieure 84 est délimitée par sa face supérieure 86 qui comporte des ergots 88 de maintien en position angulaire, dans l'une ou l'autre de ses eux positions angulaires extrêmes de la poignée 76.

Le tube inférieur de guidage 82 est percé centralement sur toute sa hauteur et il est dimensionné de manière à recevoir intérieurement le fût 72 de la pièce de retenue 70 qui y est monté à rotation dans les deux sens.

En position assemblée des deux pièces 70 et 80, la face inférieure 79 du disque 78 est en appui axial sur la face supérieure 86 de la plaque 84 et au moins un ergot radial externe 75 agencé à l'extrémité axiale inférieure du fût 72 coopère avec le bord d'extrémité inférieure 83 du tube de guidage 80.

La pièce tubulaire de guidage 80 comporte une fente axiale 90 sur toute sa hauteur qui est alignée angulairement avec la fente 62 d'introduction du câble 42 dans le fût 72 de la pièce de retenue et donc dans le trou central 58.

Comme la pièce tubulaire de guidage 80 occupe une position fixe par rapport au corps de guidage, cette pièce - qui est ici une pièce rapportée sur le corps de centrage 50 - est indexée et immobilisée angulairement ici au moyen d'un jeu de trois pions 92 qui s'étendent verticalement vers le bas sous la plaque 84 pour être reçu dans un jeu de trois trous complémentaires du corps de centrage 50.

Ces trous complémentaires peuvent être préformés par moulage dans le corps de centrage 50, ou bien ils peuvent être formés par enfoncements des trois pions 92 dans le matériau constitutif du corps de centrage 50.

Ainsi, on peut garantir que la fente axiale 90 de la pièce tubulaire de guidage 80 est alignée angulairement avec la fente 62 d'introduction du câble appartenant au corps de centrage 50.

La pièce peut par exemple être moulée en poly-oxy-méthylène (ou poly-formaldéhyde ou poly-acétal) aussi appelé « POM », ou encore en polypropylène.

Pour la fixation axiale par rapport au corps de centrage 50 de la pièce tubulaire de guidage 80, le tronçon supérieur de plus grand diamètre externe 81 du tube inférieur de guidage 82 est inséré à force et/ou est collée dans le tronçon supérieur du trou axial central 58 par l'intermédiaire.

Les deux pièces peuvent être d'abord assemblées l'une avec l'autre pour constituer un sous ensemble qui est ensuite rapporté sur le corps de centrage 50.

Ou bien, la pièce tubulaire de guidage 80 est d'abord rapportée sur le corps de centrage 5, puis la pièce 70 de retenue est ensuite insérée dans la pièce de guidage.

La pièce de guidage 80 peut aussi être réalisée sous la forme d'un insert central autour duquel le corps de centrage est surmoulé.

La pièce centrale de guidage 80 et le corps de guidage 50 peuvent aussi être réalisés par moulage par bi-injection de deux matériaux différents.

A la figure 5A, la pièce 70 de retenue du câble est dans sa première position angulaire par rapport à la pièce de guidage 80 - et donc par rapport au corps de centrage 50 - dans laquelle les fentes axiales 74 et 90 sont alignées angulairement pour permettre l'introduction d'un câble 42 à l'intérieur du fût 72.

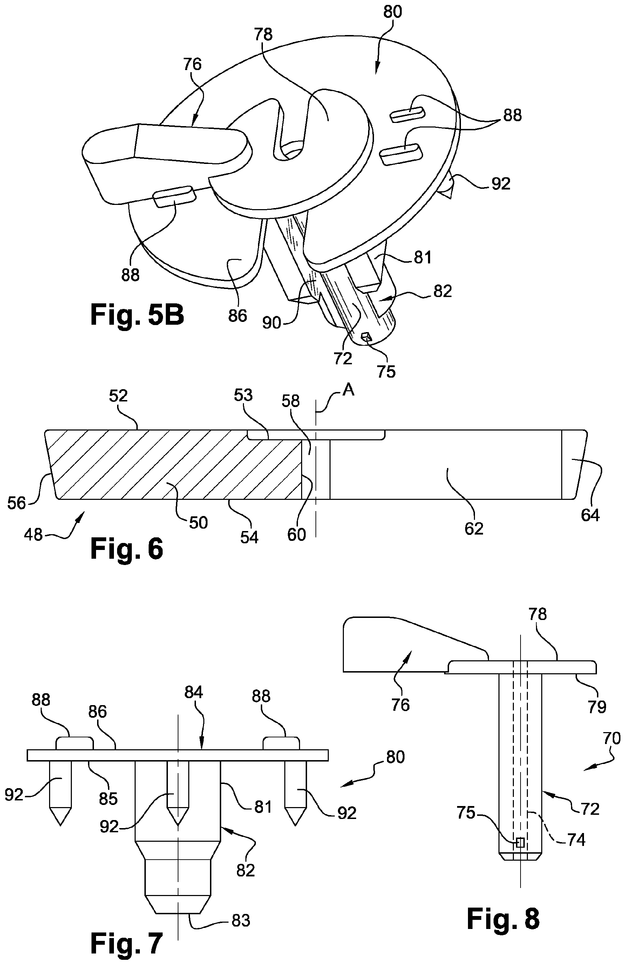

A partir de cette première position, en agissant sur la poignée 76 et en faisant pivoter la pièce de retenue 70 d'un demi-tour par rapport à la pièce de guidage 80, on atteint la deuxième position angulaire illustrée à la figure 5B dans laquelle la fente 90 - et donc la fente 62 d'introduction du corps de centrage 50 - est obturée sur toute sa hauteur par une portion de la paroi tubulaire du fût 72.

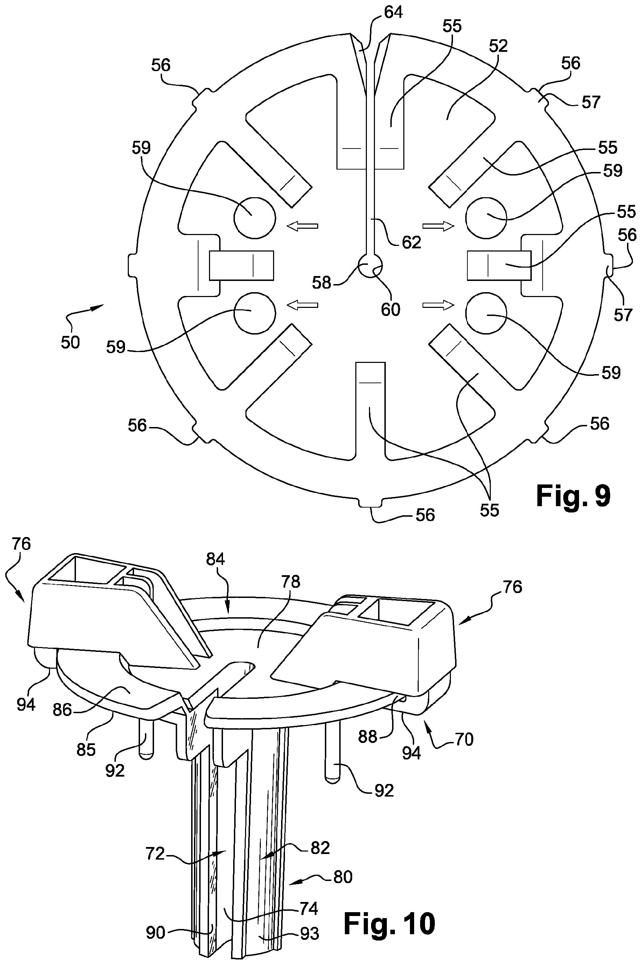

On a représenté aux figures 9 à 12B un autre mode de réalisation de l'invention qui diffère du précédent par des variantes de conception du corps de centrage 50, de la pièce tubulaire de centrage 80, et de la pièce de retenue 70.

Concernant le corps de centrage 50, sa face supérieure 52 est renforcée par une structure nervurées à nervures radiales 55 en étoile.

La face latérale « active » - qui est apte à être reçue à l'intérieur de la roue 20 en étant par exemple emboîté légèrement « à force » en contact avec la surface concave interne 21 du tronçon 34 de la jante 22 - est ici non continue circonférentiellement.

Cette face latérale est constituée par la face latérale d'une série de protubérances radiales 57.

Ces protubérances sont par exemple réparties angulairement de manière régulière et par exemple dans le prolongement des nervures 55.

Une telle conception de la face latérale en « tronçons » peut conférer plus d'élasticité au corps de centrage 50 à sa périphérie pour faciliter sa mise en place et/ou s'adapter à des variations dimensionnelles des jantes de roues.

Dans ce mode de réalisation, les évidements de préhension 49 sont réalisés sous la forme de quatre trous circulaires répartis par paires diamétralement opposées.

Autour du trou axial central 58, la face supérieure 52 du corps de centrage 50 comporte trois trous 93 de positionnement pour les pions 92 de la pièce tubulaire de guidage 80.

S'agissant de la pièce tubulaire de guidage 80, le diamètre externe de la paroi externe du tube de guidage 82 est constant sur toute sa hauteur axiale.

Cette paroi externe est rainurée sur toute sa hauteur par des rainures axiales 83 qui facilitent le montage et la tenue de la pièce de guidage dans le trou axial central du corps de centrage (50).

La pièce de retenue 70 comporte deux poignées de manœuvre 76 diamétralement opposées comportant des évidements 77 en facilitant la préhension.

La pièce de retenue 70 est assemblée sur la pièce de guidage 80 et retenue axialement sur cette dernière par deux pattes inférieures radiales diamétralement opposées 94 qui s'étendent en dessous de la face annulaire inférieure 85 de la plaque supérieure 84 de la pièce de guidage 80.

Les moyens de butée angulaire 88 sont ici reportés à la périphérie de la plaque supérieure 84.

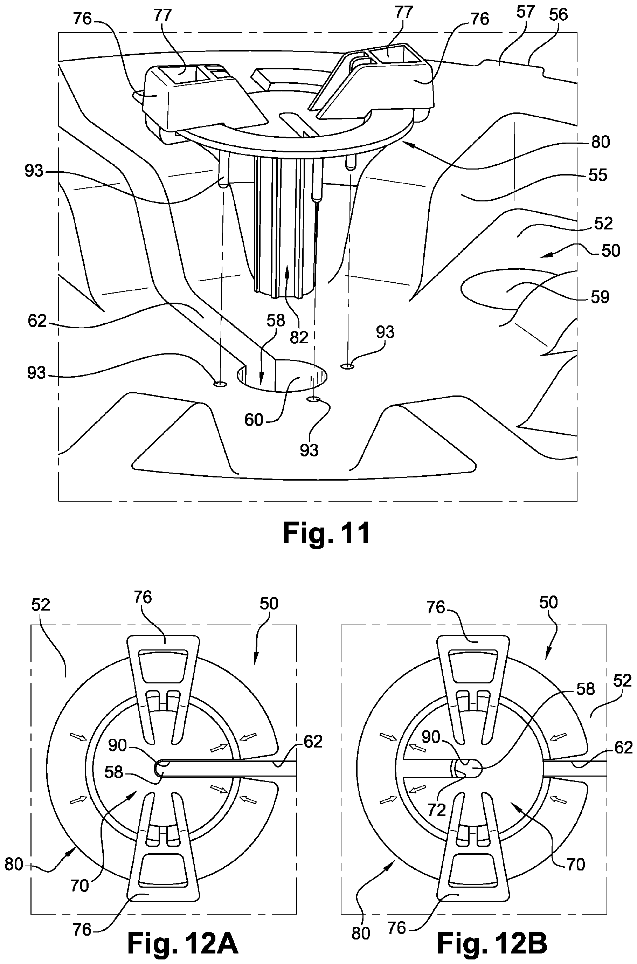

A la figure 12A, la pièce 70 de retenue du câble est dans sa première position angulaire par rapport à la pièce de guidage 80 - et donc par rapport à la fente d'introduction 62 du corps de centrage 50 - dans laquelle les fentes axiales 74 et 90 sont alignées angulairement l'une par rapport à l'autre et avec la fente d'introduction 62 pour permettre l'introduction d'un câble 42 à l'intérieur du fût 72.

A partir de cette première position, en agissant sur les poignées 76 et en faisant pivoter la pièce de retenue 70 d'un demi-tour par rapport à la pièce de guidage 80, on atteint la deuxième position angulaire illustrée à la figure 12B dans laquelle la fente 90 - et donc la fente 62 d'introduction du corps de centrage 50 - est obturée sur toute sa hauteur par une portion de la paroi tubulaire du fût 72.

Pour faciliter la mise en place et l'utilisation, la face supérieure 52 du corps de centrage 50 peut comporter des flèches et marquages à destination de l'utilisateur.

Dans les modes de réalisation qui précédents, le corps de centrage a été représenté en une seule pièce ou monobloc.

A titre de variante, le corps de centrage peut être réalisé sous la forme d'un noyau central de diamètre réduit à partir duquel s'étendent en étoile une pluralité de branches radiales de centrage dont les extrémités libres constituent des portions de face latérale de centrage aptes à coopérer avec la face interne de la jante de la roue.

Dans ce cas, les branches permettent une préhension aisée de l'organe de centrage pour sa manipulation.

Le diamètre externe du noyau central et le nombre de branches résultent d'un compromis entre la résistance mécanique souhaitée et la masse la plus réduite possible du corps de centrage.

Selon une variante non représentée, un organe de centrage selon l'invention comportant une pièce pivotante de retenue du câble peut être utilisé comme organe de centrage apte à être reçu dans l'orifice central 30 du disque 30.

## Revendications

1. Organe (48) de centrage d'un câble (42) à l'intérieur d'une roue (20) de secours de véhicule automobile, organe de centrage (48) qui comporte :
- un corps (50) de centrage dont une portion de face latérale (56) est apte à être reçue dans une portion complémentaire (22, 34) de la roue de secours (20) et qui comporte :
-- un trou axial traversant (58) de passage du câble (42) ;
-- et une fente axiale débouchante (62) d'introduction du câble (42) dans le trou axial (58) qui s'étend radialement depuis la face latérale (56) du corps de centrage (50) jusqu'au trou axial (58) ;
l'organe de centrage étant **caractérisé en ce qu'**il comprend, en outre, une pièce (70) de retenue du câble (42) à l'intérieur du trou axial (58) par obturation au moins partielle de la fente (62) d'introduction du câble (42).

2. Organe selon la revendication 1, **caractérisé en ce que** :
- la pièce (70) de retenue du câble (42) comporte un fût (72) qui s'étend axialement dans le trou axial (58) de passage du câble (42) et qui comporte une fente axiale (74) d'introduction du câble (42) à l'intérieur du fût (72) ;
- et la pièce (70) de retenue du câble (42) est montée pivotante par rapport au corps de centrage (50) entre une première position angulaire, de montage du câble (42) à l'intérieur du trou axial (58) du corps de centrage (50), dans laquelle la fente axiale (74) du fût (72) est alignée angulairement avec la fente (62) d'introduction du corps de centrage (50), et une deuxième position angulaire, de retenue du câble (42), dans laquelle une portion de paroi latérale du fût (72) s'étend en regard de la fente (62) d'introduction du corps de centrage (50).

3. Organe selon la revendication 2, **caractérisé en ce que** le fût (72) de la pièce (70) de retenue du câble (42) s'étend axialement sur toute la hauteur du trou axial (58) du corps de centrage (50) pour obturer la fente (62) du corps de centrage (50) sur toute sa hauteur.

4. Organe selon l'une des revendications 2 ou 3, **caractérisé en ce qu'**il comporte une pièce tubulaire (80) de guidage en rotation de la pièce (70) de retenue du câble (42) qui :
- est interposée radialement entre la paroi interne (60) du trou axial (58) du corps de centrage (50) et la paroi externe du fût (72) de la pièce (70) de retenue du câble (42) ;
- et est fendue axialement (74) sur toute sa hauteur en vis-à-vis de la fente d'introduction (62) du corps de centrage (50).

5. Organe selon la revendication 4, **caractérisé en ce que** l'une (84) des extrémités axiales de la pièce tubulaire de guidage (80) comporte des moyens (92) d'indexation en position angulaire de la pièce tubulaire (80) par rapport au corps de centrage (50).

6. Organe selon l'une quelconque des revendications 2 à 5, **caractérisé en ce que** le corps de centrage (80) est réalisé par moulage en un premier matériau dit tendre, notamment en polystyrène expansé ou en un matériau hybride à base de polystyrène et de polyoléfine, et **en ce que** la pièce de retenue (70) est réalisée par moulage en un deuxième matériau dit dur, tel qu'un polymère thermoplastique.

7. Organe selon l'une quelconque des revendications précédentes, **caractérisé en ce que** le trou axial traversant (58) de passage du câble (42) est un trou central du corps de centrage (50).

8. Ensemble comportant :
- une roue de secours (20) de véhicule automobile (10) comportant une jante latérale annulaire (22) et un disque (24) de fixation de la roue de secours ;
- et un organe de centrage (48) selon l'une quelconque des revendications 1 à 7,
**caractérisé en ce que** ladite portion de la face latérale (56) du corps de centrage (50) de l'organe de centrage (50) est reçue à l'intérieur d'une portion complémentaire (34, 51) de la jante (22) de la roue de secours (20).

9. Ensemble selon la revendication 8, **caractérisé en ce que** le disque (24) de fixation de la roue de secours (20) est décalé axialement par rapport à un plan radial médian de la jante (22) pour délimiter un espace interne (32) de la jante (22), et **en ce que** l'organe de centrage (28) est agencé dans ledit espace interne (32).

10. Véhicule automobile (10) comportant au moins une portion (12) d'un plancher (14) et un ensemble selon l'une des revendications 8 ou 9 qui est agencé en-dessous de cette portion (14) du plancher (12), **caractérisé en ce que** l'organe de centrage (48) est agencé en regard de ladite portion (14) du plancher (12).

11. Dispositif de fixation d'une roue de secours (20) d'un véhicule automobile (10), **caractérisé en ce qu'**il comprend :
- un treuil (40) de traction de la roue de secours (20) ;
- un câble (42) de traction de la roue de secours dont une extrémité est reliée au treuil (40) et dont l'autre extrémité (44) est reliée à la roue de secours (20);
- et un organe (28) de centrage du câble (42) par rapport à la roue de secours (20) selon l'une quelconque des revendications 1 à 7.

## Patentansprüche

1. Vorrichtung (48) zum Zentrieren eines Seils (42) im Inneren eines Reserverades (20) eines Kraftfahrzeugs, wobei die Vorrichtung zum Zentrieren (48) aufweist:
- einen Zentrierkörper (50), von dem ein Abschnitt einer Seitenfläche (56) in einem komplementären Abschnitt (22, 34) des Reserverades (20) aufgenommen werden kann und der aufweist:
-- ein durchgehendes axiales Loch (58) für den Durchgang des Seils (42);
-- und einen durchgehenden axialen Schlitz (62) zur Einführung des Seils (42) in das axiale Loch (58), welcher sich radial von der Seitenfläche (56) des Zentrierkörpers (50) bis zu dem axialen Loch (58) erstreckt;
wobei die Vorrichtung zum Zentrieren **dadurch gekennzeichnet ist, dass** sie außerdem ein Teil (70) zum Halten des Seils (42) im Inneren des axialen Loches (58) durch wenigstens teilweises Verschließen des Schlitzes (62) zur Einführung des Seils (42) umfasst.

2. Vorrichtung nach Anspruch 1, **dadurch gekennzeichnet, dass**:
- das Teil (70) zum Halten des Seils (42) einen Schaft (72) aufweist, welcher sich axial in dem axialen Loch (58) für den Durchgang des Seils (42) erstreckt und welcher einen axialen Schlitz (74) zur Einführung des Seils (42) ins Innere des Schaftes (72) aufweist;
- und das Teil (70) zum Halten des Seils (42) in Bezug auf den Zentrierkörper (50) schwenkbar gelagert ist zwischen einer ersten Winkelposition zur Anbringung des Seils (42) im Inneren des axialen Loches (58) des Zentrierkörpers (50), in welcher der axiale Schlitz (74) des Schaftes (72) im gleichen Winkel wie der Einführungsschlitz (62) des Zentrierkörpers (50) ausgerichtet ist, und einer zweiten Winkelposition zum Halten des Seils (42), in welcher sich ein Abschnitt der Seitenwand des Schaftes (72) gegenüber dem Einführungsschlitz (62) des Zentrierkörpers (50) erstreckt.

3. Vorrichtung nach Anspruch 2, **dadurch gekennzeichnet, dass** sich der Schaft (72) des Teils (70) zum Halten des Seils (42) axial über die gesamte Höhe des axialen Loches (58) des Zentrierkörpers (50) erstreckt, um den Schlitz (62) des Zentrierkörpers (50) auf seiner gesamten Höhe zu verschließen.

4. Vorrichtung nach einem der Ansprüche 2 oder 3, **dadurch gekennzeichnet, dass** sie ein rohrförmiges Teil (80) zur Drehführung des Teils (70) zum Halten des Seils (42) aufweist, welches:
- radial zwischen der Innenwand (60) des axialen Loches (58) des Zentrierkörpers (50) und der Außenwand des Schaftes (72) des Teils (70) zum Halten des Seils (42) angeordnet ist;
- und auf seiner gesamten Höhe gegenüber dem Einführungsschlitz (62) des Zentrierkörpers (50) axial geschlitzt (74) ist.

5. Vorrichtung nach Anspruch 4, **dadurch gekennzeichnet, dass** eines (84) der axialen Enden des rohrförmigen Führungsteils (80) Mittel (92) zum Indexieren des rohrförmigen Teils (80) in einer Winkelposition bezüglich des Zentrierkörpers (50) aufweist.

6. Vorrichtung nach einem der Ansprüche 2 bis 5, **dadurch gekennzeichnet, dass** der Zentrierkörper (80) durch Formen aus einem ersten, sogenannten weichen Material hergestellt ist, insbesondere aus Polystyrolschaum oder aus einem hybriden Material auf der Basis von Polystyrol und von Polyolefin, und dadurch, dass das Halteteil (70) durch Formen aus einem zweiten, sogenannten harten Material hergestellt ist, wie etwa einem thermoplastischen Polymer.

7. Vorrichtung nach einem der vorhergehenden Ansprüche, **dadurch gekennzeichnet, dass** das durchgehende axiale Loch (58) für den Durchgang des Seils (42) ein mittiges Loch des Zentrierkörpers (50) ist.

8. Anordnung, welche aufweist
- ein Reserverad (20) eines Kraftfahrzeugs (10), das eine ringförmige seitliche Felge (22) und eine Scheibe (24) zur Befestigung des Reserverades aufweist;
- und eine Vorrichtung zum Zentrieren (48) nach einem der Ansprüche 1 bis 7,
**dadurch gekennzeichnet, dass** der Abschnitt der Seitenfläche (56) des Zentrierkörpers (50) der Vorrichtung zum Zentrieren (50) im Inneren eines komplementären Abschnitts (34, 51) der Felge (22) des Reserverades (20) aufgenommen ist.

9. Anordnung nach Anspruch 8, **dadurch gekennzeichnet, dass** die Scheibe (24) zur Befestigung des Reserverades (20) bezüglich einer radialen Mittelebene der Felge (22) axial versetzt ist, um einen inneren Raum (32) der Felge (22) zu begrenzen, und dadurch, dass die Vorrichtung zum Zentrieren (28) in dem inneren Raum (32) angeordnet ist.

10. Kraftfahrzeug (10), welches wenigstens einen Abschnitt (12) eines Bodens (14) und eine Anordnung nach einem der Ansprüche 8 oder 9, welche unterhalb dieses Abschnitts (14) des Bodens (12) angeordnet ist, aufweist, **dadurch gekennzeichnet, dass** die Vorrichtung zum Zentrieren (48) gegenüber dem Abschnitt (14) des Bodens (12) angeordnet ist.

11. Vorrichtung zur Befestigung eines Reserverades (20) eines Kraftfahrzeugs (10), **dadurch gekennzeichnet, dass** sie umfasst:
- eine Zugwinde (40) für das Reserverad (20);
- ein Zugseil (42) für das Reserverad, von dem ein Ende mit der Winde (40) verbunden ist und dessen anderes Ende (44) mit dem Reserverad (20) verbunden ist;
- und eine Vorrichtung (28) zum Zentrieren eines Seils (42) in Bezug auf das Reserverad (20) nach einem der Ansprüche 1 bis 7.

## Claims

1. A member (48) for centering a cable (42) inside a spare wheel (20) of a motor vehicle, said centering member (48) comprising:
- a centering body (50), of which a lateral face portion (56) can be received in a complementary portion (22, 34) of the spare wheel (20) and which comprises:
-- an axial through hole (58) for the passage of the cable (42);
-- and an open-ended axial slit (62) for introducing the cable (42) into the axial hole (58) which extends radially from the lateral face (56) of the centering body (50) to the axial hole (58);
the centering member being **characterized in that** it further comprises a part (70) for retaining the cable (42) inside the axial hole (58) by at least partially closing the slit (62) for introducing the cable (42).

2. The member as claimed in claim 1, **characterized in that**:
- the part (70) for retaining the cable (42) comprises a shaft (72) which extends axially into the axial hole (58) for the passage of the cable (42) and which comprises an axial slit (74) for introducing the cable (42) into the shaft (72);
- and the part (70) for retaining the cable (42) is mounted to pivot with respect to the centering body (50) between a first angular position, for mounting the cable (42) inside the axial hole (58) of the centering body (50), in which the axial slit (74) of the shaft (72) is aligned angularly with the slit (62) for introducing the centering body (50), and a second angular position for retaining the cable (42), in which a portion of lateral wall of the shaft (72) extends opposite the slit (62) for introducing the centering body (50).

3. The member as claimed in claim 2, **characterized in that** the shaft (72) of the part (70) for retaining the cable (42) extends axially over the entire height of the axial hole (58) of the centering body (50) to close the slit (62) of the centering body (50) over its entire height.

4. The member as claimed in one of claims 2 and 3, **characterized in that** it comprises a tubular part (80) for rotationally guiding the part (70) for retaining the cable (42) which:
- is inserted radially between the inner wall (60) of the axial hole (58) of the centering body (50) and the outer wall of the shaft (72) of the part (70) for retaining the cable (42);
- and is slit axially (74) over its entire height opposite the slit (62) for introducing the centering body (50).

5. The member as claimed in claim 4, **characterized in that** one (84) of the axial ends of the tubular guiding part (80) comprises means (92) for indexing the tubular part (80) in terms of angular position with respect to the centering body (50).

6. The member as claimed in any one of claims 2 to 5, **characterized in that** the centering body (80) is produced by molding in a first material said to be soft, notably of expanded polystyrene or of a hybrid material based on polystyrene and polyolefin, and **in that** the retaining part (70) is produced by molding in a second material said to be hard, such as a thermoplastic polymer.

7. The member as claimed in any one of the preceding claims, **characterized in that** the axial through hole (58) for the passage of the cable (42) is a central hole of the central body (50).

8. An assembly comprising:
- a spare wheel (20) of a motor vehicle (10) comprising an annular lateral rim (22) and a disk (24) for fixing the spare wheel;
- and a centering member (48) as claimed in any one of claims 1 to 7,
**characterized in that** said portion of the lateral face (56) of the centering body (50) of the centering member (50) is received inside a complementary portion (34, 51) of the rim (22) of the spare wheel (20).

9. The assembly as claimed in claim 8, **characterized in that** the disk (24) for fixing the spare wheel (20) is offset axially with respect to a median radial plane of the rim (22) to delimit an internal space (32) of the rim (22), and **in that** the centering member (28) is arranged in said internal space (32).

10. A motor vehicle (10) comprising at least one portion (12) of a floor (14) and an assembly as claimed in one of claims 8 and 9 which is arranged below this portion (14) of the floor (12), **characterized in that** the centering member (48) is arranged opposite said portion (14) of the floor (12).

11. A device for fixing a spare wheel (20) of a motor vehicle (10), **characterized in that** it comprises:
- a winch (40) for pulling the spare wheel (20);
- a cable (42) for pulling the spare wheel, of which one end is linked to the winch (40) and of which the other end (44) is linked to the spare wheel (20);
- and a member (28) for centering the cable (42) with respect to the spare wheel (20) as claimed in any one of claims 1 to 7.
